Europäisches Patentamt

**European Patent Office**

Office européen des brevets

(11) Veröffentlichungsnummer: **0 113 847**
**B1**

(12) **EUROPÄISCHE PATENTSCHRIFT**

(45) Veröffentlichungstag der Patentschrift:
01.04.87

(51) Int. Cl.⁴: **F 16 B 13/04**

(21) Anmeldenummer: **83112130.6**

(22) Anmeldetag: **02.12.83**

(54) **Spreizdübel.**

(30) Priorität: **18.01.83 DE 3301389**

(43) Veröffentlichungstag der Anmeldung:
**25.07.84 Patentblatt 84/30**

(45) Bekanntmachung des Hinweises auf die Patenterteilung:
**01.04.87 Patentblatt 87/14**

(84) Benannte Vertragsstaaten:
**AT BE CH FR GB IT LI NL**

(56) Entgegenhaltungen:
**CH - A - 488 069**
**DE - A - 1 400 218**
**DE - A - 1 500 934**
**DE - A - 1 625 391**
**DE - A - 1 936 360**
**DE - A - 2 406 207**
**DE - B - 2 454 677**
**GB - A - 2 033 039**

(73) Patentinhaber: **fischer-werke Artur Fischer GmbH & Co. KG, Weinhalde 14-18,**
**D-7244 Tumlingen/Waldachtal 3 (DE)**

(72) Erfinder: **Fischer, Artur, Dr. h. c., Weinhalde 34,**
**D-7244 Waldachtal 3/Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Spreizdübel bestehend aus einer geschlitzten mit einem Teil ihrer Länge in den zu befestigenden Gegenstand eingreifenden Metallhülse, die einen durch Eindrehen einer Befestigungsschraube aufspreizbaren Spreizteil aufweist.

Bei der Befestigung von Gegenständen an Wänden werden solche Spreizdübel bevorzugt, die in Durchsteckmontage verwendet werden können, bei der das Bohrloch im zu befestigenden Bauteil und im Mauerwerk einen gleichen Durchmesser aufweisen, und der Spreizdübel ohne Fortnahme des zu befestigenden Bauteiles durch dieses hindurch in das Bohrloch im Mauerwerk eingesetzt werden kann. Ein solcher vollständig aus Kunststoff bestehender Spreizdübel ist aus der DE-C 1 217 580 bekannt. Die Ausführung aus Kunststoff hat den Vorteil, dass eine Befestigungsschraube mit Holzschraubengewinde verwendbar ist, die beim Eindrehen aufgrund der höheren Steigung gegenüber einem metrischen Gewinde zu kürzeren Montagezeiten führt. Allerdings ist die Querkraftaufnahme der aus Kunststoff bestehenden und in den zu befestigenden Gegenstand eingreifenden Hülse geringer als bei einem eine Metallhülse aufweisenden, beispielsweise aus der CH-A 488 069 bekannten Spreizdübel, der durch Einziehen eines metallischen oder aus Kunststoff bestehenden Spreizkörpers mit einer ein metrisches Gewinde aufweisenden Befestigungsschraube aufgespreizt wird.

Schliesslich sind aus der DE-A 1 500 934 Spreizdübel mit Metallhülsen bekannt, in denen durch Öffnungen der Metallhülse nach aussen drückbare Spreizelemente eingesetzt sind. Die Metallhülse dient bei diesen Dübeln lediglich zur Halterung der Spreizelemente und hat keine eigene Spreizfunktion.

Der Erfindung liegt daher die Aufgabe zugrunde, einen eine Metallhülse wegen der höheren Querkraftaufnahme aufweisenden Spreizdübel so zu gestalten, dass er in Kombination mit einer ein Holzschraubengewinde aufweisenden Befestigungsschraube verwendbar ist.

Erfindungsgemäss wird dies dadurch erreicht, dass in den Spreizteil der Metallhülse ein aus Kunststoff bestehender, mit einem sich verjüngenden Hohlraum ausgestatteter und über einen Teil seiner Länge geschlitzter Spreizkörper zumindest mit einem Teil seiner Länge eingesetzt und in einer Lage arretiert ist, bei der die Schlitzebene des Spreizkörpers mit der Schlitzebene der Metallhülse fluchtet.

Der in den Spreizteil der Metallhülse eingesetzte Spreizkörper aus Kunststoff ermöglicht es, zur Aufspreizung eine Befestigungsschraube mit einem Holzschraubengewinde einzudrehen. Durch den sich verjüngenden Hohlraum und der Aufschlitzung des Spreizkörpers wird dieser ähnlich einem aus Kunststoff bestehenden Spreizdübel im Spreizteil der Metallhülse aufgespreizt. Bei diesem Spreizvorgang wird auch der geschlitzte Teil der Metallhülse aufgeweitet und im Bohrloch des Mauerwerkes verkeilt. Bei dem Aufspreizvorgang schneidet sich das Gewinde der Befestigungsschraube in den aus Kunststoff bestehenden und in der Metallhülse fest arretierten Spreizkörper ein und schafft somit eine zugfeste Verbindung zwischen Spreizdübel und Befestigungsschraube, die es ermöglicht, den Gegenstand gegen das Mauerwerk bzw. gegen eine an der Metallhülse angeordnete Abstandshalterung zu verspannen. Ohne Verschiebebewegung zwischen dem Spreizkörper und der Metallhülse ist somit durch die erfindungsgemässe Gestaltung eine grossflächige und damit auch in weichen und porösen Baustoffen hohe Auszugskräfte ermöglichende Verkeilung des Spreizdübels im Bohrloch möglich.

In einer weiteren Ausgestaltung der Erfindung können an der Aussenfläche des Spreizkörpers Nocken angeordnet sein, die in entsprechende Aussparungen der Metallhülse eingreifen. Mit dieser Massnahme wird in einfacher Weise die Lage des Spreizkörpers in der Metallhülse arretiert. Damit wird verhindert, dass bei der Handhabung des Spreizdübels oder beim Ansetzen der Befestigungsschraube der Spreizkörper verrutscht.

In einer weiteren Ergänzung der Erfindung kann die Aussenfläche des Nockens zum hinteren Ende des Spreizdübels hin zur Bildung einer Sägezahnform abgeschrägt sein. Durch die Abschrägung wird das Einführen des Spreizkörpers in die Metallhülse bei der Fertigung des Spreizdübels erleichtert. Die Metallhülse federt soweit auf, dass die Nocken in die Aussparungen der Metallhülse einklipsen können. Nach dem Zurückfedern der Metallhülse ist der Spreizkörper gesichert.

In einer weiteren Ausgestaltung der Erfindung können die in den Aussparungen der Metallhülse befindlichen Nocken des Spreizkörpers über die Aussenfläche der Metallhülse geringfügig überstehen. Die über die Aussenfläche der Metallhülse ragenden Teile der Nocken wirken als Drehsicherungsrippen, die ein Mitdrehen der Metallhülse beim Eindrehen der Befestigungsschraube verhindern.

Schliesslich kann in einer weiteren Ergänzung der Erfindung der Spreizkörper mit einem Teil seiner Länge die vordere Stirnseite der Metallhülse überragen, und dieser Teil im Durchmesser dem Aussendurchmesser der Metallhülse angepasst sein. Mit dieser Massnahme kann der zur Verankerung beitragende Teil des Spreizdübels dem Anwendungszweck entsprechend verlängert werden. Damit kann bspw. auch für die Anwendung in Hohlkammersteinen eine ausreichende Spreizlänge erreicht werden, um den Spreizdübel in wenigstens zwei Stegen des Hohlkammersteines zu verankern.

In der Zeichnung ist ein Ausführungsbeispiel des Spreizdübels nach der Erfindung dargestellt. Es zeigen:

Fig. 1 den erfindungsgemässen Spreizdübel ohne Befestigungsschraube

Fig. 2 den Spreizdübel in verankertem Zustand.

Der Spreizdübel besteht aus der über einen Teil ihrer Länge geschlitzten Metallhülse 1 und einem aus Kunststoff bestehenden Spreizkörper 2, der in den Spreizteil 3 der Metallhülse 1 eingeschoben und dort durch in Aussparungen 4 der Metallhülse eingreifenden, an der Aussenfläche des Spreizkörpers 2 angeordneten Nocken 5 gehalten ist. Der Spreizkörper 2 weist einen sich verjüngenden Hohlraum 6 und eine über einen Teil der Länge des Spreizkörpers sich erstreckende Längsschlitzung 7 auf. Dadurch ist der Spreizkörper 2 beim Eindrehen einer Befestigungsschraube 8 aufspreizbar und erzeugt somit einen radialen, auf die Metallhülse 1 wirkenden Auspreizdruck, der zu einer Verankerung im Bohrloch 9 führt. Um die Aufspreizung des Spreizkörpers 2 mit der Aufspreizung der Metallhülse 1 zu synchronisieren, wird der Spreizkörper 2 in der Metallhülse 1 durch die Nocken 5 so gehalten, dass die Schlitzebene des Spreizkörpers 2 mit der Schlitzebene der Metallhülse 1 fluchtet. Die Spreizlänge des Spreizdübels kann in Anpassung an den jeweiligen Anwendungszweck durch Verlängerung des Spreizkörpers 2 in oder ausserhalb der Metallhülse 1 variiert werden. Bei einer Verlängerung ausserhalb der Metallhülse ist der Aussendurchmesser des verlängerten Teiles 10 dem Aussendurchmesser der Metallhülse 1 angeglichen. Die dabei entstehende und sich an der vorderen Stirnseite der Metallhülse abstützende Schulter dient zusätzlich zu den Nocken 5 als Montagehilfe, um das Einschieben des Spreizkörpers in die Metallhülse zu begrenzen. Eine weitere Montagehilfe ergibt sich durch die Abschrägung 11 der Aussenfläche der Nocken 5, die ein Aufweiten der Metallhülse 1 beim Einschieben begünstigt. Nach dem Zurückfedern der Metallhülse ist der Spreizkörper 2 in der Metallhülse 1 sicher arretiert. Der geringfügige Überstand 12 der Nocken 5 über die Aussenfläche der Metallhülse ermöglicht eine Vorfixierung des Spreizdübels 2 im Bohrloch 9, die den Spreizdübel beim Ansetzen der Befestigungsschraube 8 gegen Verdrehen im Bohrloch sichert.

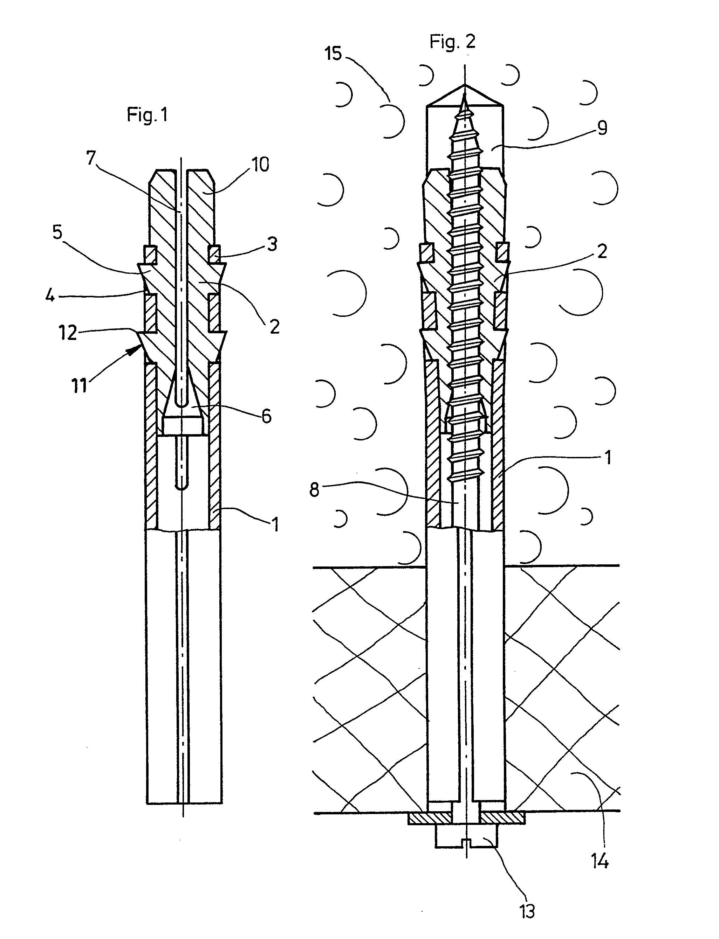

Zur Verankerung des Spreizdübels gemäss Figur 2 wird die Befestigungsschraube 8 in den Spreizkörper 2 eingedreht. Durch den sich verengenden Hohlraum 6 des Spreizkörpers 2 wird der Spreizkörper und damit auch die Metallhülse 1 aufgeweitet und im Bohrloch 9 verankert. Mit dem Schraubenkopf 13 ist nunmehr die Verspannung eines Gegenstandes 14 gegen das Mauerwerk 15 möglich. Ohne den Erfindungsgedanken zu verlassen, kann die Metallhülse auch mit Anschlagmitteln versehen werden, die eine Abstandsmontage des zu befestigenden Gegenstandes erlauben.

**Patentansprüche**

1. Spreizdübel bestehend aus einer geschlitzten mit einem Teil ihrer Länge in den zu befestigenden Gegenstand (14) eingreifenden Metallhülse (1), die einen durch Eindrehen einer Befestigungsschraube (8) aufspreizbaren Spreizteil (3) aufweist, dadurch gekennzeichnet, dass in den Spreizteil (3) der Metallhülse (1) ein aus Kunststoff bestehender, mit einem sich verjüngenden Hohlraum (6) ausgestatteter und über einen Teil seiner Länge geschlitzter Spreizkörper (2) zumindest mit einem Teil seiner Länge eingesetzt und in einer Lage arretiert ist, bei der die Schlitzebene des Spreizkörpers (2) mit der Schlitzebene der Metallhülse (1) fluchtet.

2. Spreizdübel nach Anspruch 1, dadurch gekennzeichnet, dass an der Aussenfläche des Spreizkörpers (2) Nocken (5) angeordnet sind, die in entsprechende Aussparungen (4) der Metallhülse (1) eingreifen.

3. Spreizdübel nach Anspruch 2, dadurch gekennzeichnet, dass die Aussenfläche des Nokkens (5) zum hinteren Ende des Spreizdübels hin zur Bildung einer Sägezahnform abgeschrägt ist.

4. Spreizdübel nach Anspruch 2, dadurch gekennzeichnet, dass die in den Aussparungen (4) der Metallhülse (1) befindlichen Nocken (5) des Spreizkörpers über die Aussenfläche der Metallhülse (1) geringfügig überstehen.

5. Spreizdübel nach Anspruch 1, dadurch gekennzeichnet, dass der Spreizkörper (2) mit einem Teil seiner Länge die vordere Stirnseite der Metallhülse (1) überragt, und dieser Teil (10) im Durchmesser dem Aussendurchmesser der Metallhülse (1) angepasst ist.

**Claims**

1. Expansible wall plug consisting of a slotted metal sleeve (1) which engages with a portion of its length in the article (14) to be fastened and which has an expansible portion (3) which may be expanded by driving in a fastening screw (8), characterised in that an expansible body (2) that consists of plastics material and is provided with a tapering cavity (6) and is slotted over a portion of its length is inserted, at least with a portion of its length, into the expansible portion (3) of the metal sleeve (1) and is locked in a position in which the slot plane of the expansible body (2) is aligned with the slot plane of the metal sleeve (1).

2. Expansible wall plug according to claim 1, characterised in that projections (5) which engage in corresponding recesses (4) of the metal sleeve (1) are disposed on the external surface of the expansible body (2).

3. Expansible wall plug according to claim 2, characterised in that the external surface of the projection (5) is chamfered towards the rear end of the expansible wall plug to form a saw-tooth shape.

4. Expansible wall plug according to claim 2, characterised in that the projections (5) of the expansible body located in the recesses (4) of the metal sleeve (1) are slightly proud of the external surface of the metal sleeve (1).

5. Expansible wall plug according to claim 1, characterised in that the expansible body (2) projects with a portion of its length beyond the leading end face of the metal sleeve (1), and this portion (10) is matched in diameter to the external diameter of the metal sleeve (1).

**Revendications**

1. Cheville expansible consistant en un manchon métallique (1) fendu et dont une partie de la longueur pénètre dans l'objet (14) à fixer, ce manchon présentant une partie (13) expansible quand on y visse une vis (8) de fixation, cheville caractérisée en ce que, dans la partie expansible (3) du manchon métallique (1) est placé, sur une partie au moins de sa longueur, un organe (2) d'expansion, consistant en de la matière plastique, comportant une cavité (6) qui s'effile, organe fendu sur une partie de sa longueur et qui est fixé en une position en laquelle le plan de la fente de l'organe (2) d'expansion affleure le plan de la fente du manchon métallique (1).

2. Cheville expansible selon la revendication 1, caractérisée en ce que, sur la surface externe de l'organe (2) d'expansion, sont placés des mentonnets (5) qui pénètrent dans des encoches (4) correspondantes du manchon métallique (1).

3. Cheville expansible selon la revendication 2, caractérisée en ce que la surface externe du mentonnet (5) est inclinée vers l'extrémité arrière de la cheville expansible, afin de prendre une forme en dents de scie.

4. Cheville expansible selon la revendication 2, caractérisée en ce que les mentonnets (5) de l'organe d'expansion, se trouvant dans les encoches (4) du manchon métallique (1), font légèrement saillie au-delà de la surface externe de ce manchon métallique (1).

5. Cheville expansible selon la revendication 1, caractérisée en ce que l'organe (2) d'expansion fait saillie, par une partie de sa longueur, au-delà du côté frontal avant du manchon métallique (1), et en ce que le diamètre de cette partie (10) est adapté au diamètre extérieur du manchon métallique (1).

Fig. 2

Fig. 1